# FASCICULE DE BREVET EUROPEEN

(11) **EP 1 783 403 B1**
(45) Date de publication et mention de la délivrance du brevet: **23.04.2014**
(21) Numéro de dépôt: 06291678.8
(22) Date de dépôt: 27.10.2006
(51) Int. Cl.: F16J 15/02, B60J 10/08

(54) **Profilé d'étanchéité destiné à assurer une interface étanche entre deux structures mobiles, son procédé de fabrication et module d'étanchéité l'incorporant**
Dichtungsprofil zur Sicherung einer wasserdichten Übergangsfläche zwischen zwei beweglichen Strukturen, dessen Herstellungsverfahren und ein Dichtungsmodul mit diesem Profil
Sealing profile in order to secure a waterproof transition area between two mobile structures, its production process and a sealing module containing the profile

(30) Priorité: 04.11.2005 FR 0511251
(43) Date de publication de la demande: 09.05.2007
(73) Titulaire: Hutchinson, 75008 Paris (FR)
(72) Inventeur: Paternoster, Jean-Noël, 38430 Moirans (FR); Chauvin, Patricia, 38500 Voiron (FR); Douillet, Jacques, 38430 Moirans (FR); Pelade, Claude, 38120 St. Egreve (FR)
(74) Mandataire: Bolinches, Michel Jean-Marie

(56) Documents cités:
- EP-A- 0 435 685
- DE-A1- 19 955 504
- PATENT ABSTRACTS OF JAPAN vol. 2003, no. 04, 2 avril 2003 (2003-04-02) -& JP 2002 362161 A (TOYODA GOSEI CO LTD), 18 décembre 2002 (2002-12-18)
- PATENT ABSTRACTS OF JAPAN vol. 2003, no. 12, 5 décembre 2003 (2003-12-05) -& JP 2003 237378 A (NISHIKAWA RUBBER CO LTD), 27 août 2003 (2003-08-27)
- PATENT ABSTRACTS OF JAPAN vol. 008, no. 140 (M-305), 29 juin 1984 (1984-06-29) & JP 59 038124 A (NISSAN JIDOSHA KK), 1 mars 1984 (1984-03-01)

## Description

La présente invention concerne un profilé d'étanchéité destiné à assurer une interface étanche entre deux structures mobiles l'une par rapport à l'autre, son procédé de fabrication et un module d'étanchéité l'incorporant. L'invention s'applique notamment, mais pas nécessairement, à l'interface entre une première structure de type dormant, tel qu'un dormant de fenêtre, et une seconde structure de type ouvrant à frappe, coulissant ou pivotant, tel qu'un ouvrant de fenêtre.

L'étanchéité entre deux structures mobiles est généralement obtenue en montant un profilé d'étanchéité sur une première structure, ce profilé comportant classiquement une partie rigide adaptée pour sa fixation à la première structure et une partie dynamique d'étanchéité, telle qu'une lèvre souple, qui est reliée à la partie rigide et qui est destinée à être déformée par la seconde structure en réponse à une sollicitation, l'énergie résultant de la déformation se traduisant par l'exercice d'une pression sur la seconde structure qui tend à rendre l'interface étanche. De manière connue, l'étanchéité est d'autant mieux assurée que la partie souple du profilé est plus résiliente et, par conséquent, se déforme davantage en réponse à la sollicitation en appuyant sur la seconde structure.

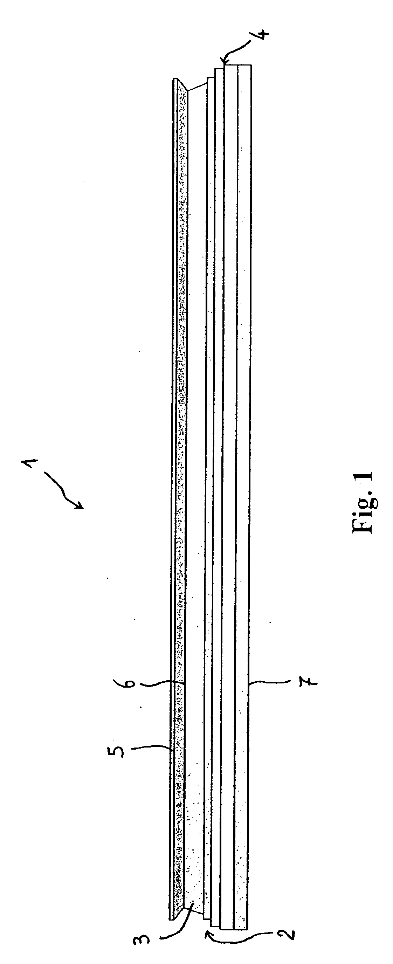

La figure 1 jointe illustre un tel profilé d'étanchéité 1 connu, dans lequel la partie rigide 2 comporte une embase transversale 3 sur laquelle sont formés des moyens de fixation 4 du profilé 1 sur la première structure, par exemple un cadre d'un dormant de fenêtre, et dans lequel la lèvre souple 5, qui est destinée à être appliquée sur la seconde structure, par exemple un panneau de vitrage mobile, s'étend obliquement à partir d'un bord latéral 6 de l'embase 3 en direction de l'autre bord latéral 7 de cette dernière.

Ce profilé 1, s'il permet de procurer une étanchéité instantanée satisfaisante pour un effort de fermeture réduit (ramené au périmètre de la fenêtre), présente néanmoins l'inconvénient d'être le siège d'une relaxation insatisfaisante et donc d'une étanchéité dans la durée laissant à désirer, en ce sens que l'on observe une décroissance dans le temps de la force de réaction de la lèvre souple 5 vers la seconde structure en réponse à des sollicitations répétées.

On a donc cherché à réaliser des profilés d'étanchéité incorporant un moyen de rappel élastique entre ladite partie rigide et ladite lèvre souple en vue d'exercer, en réponse à chaque sollicitation, une force de rappel sur la lèvre qui soit sensiblement constante dans le temps.

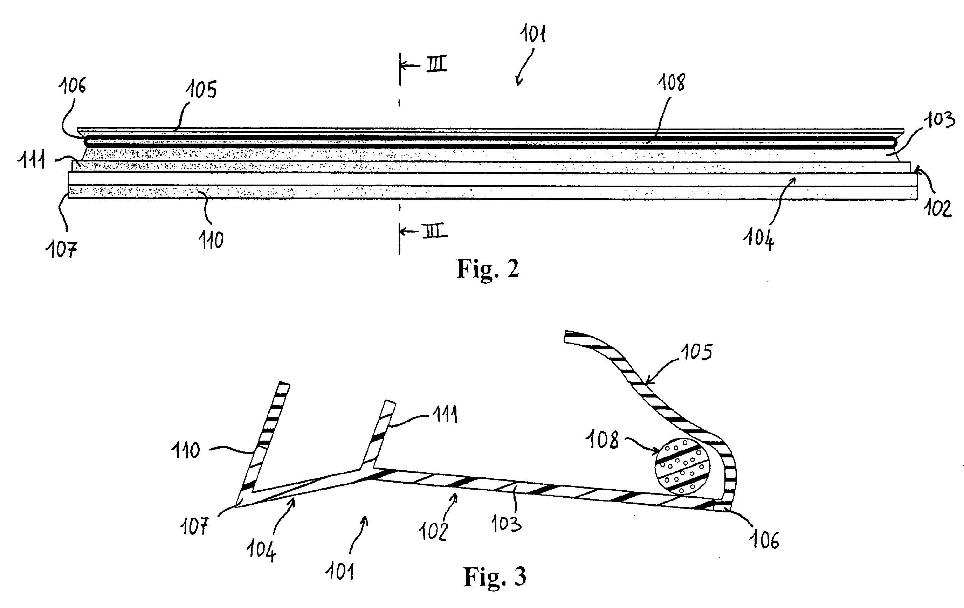

Les figures 2 et 3 jointes illustrent un tel profilé d'étanchéité 101 connu qui incorpore ce moyen de rappel élastique 108 et qui est également adapté dans cet exemple pour assurer l'étanchéité entre un cadre de dormant d'une fenêtre et un panneau de vitrage mobile. Ce moyen de rappel 108 est monté entre l'embase 103 de la partie rigide 102 du profilé 101 et la lèvre souple 105 qui est reliée obliquement à un bord latéral 106 de cette embase 103 en s'étendant vers son autre bord latéral 107, lequel est pourvu de moyens de fixation 104 en « U » dont les branches 110 et 111 s'étendent du même côté de l'embase 103 que la lèvre 105.

Ce moyen de rappel élastique 108 est formé d'un cordon cylindrique de section circulaire qui, conformément à l'exemple de la figure 2, est généralement à base de caoutchouc cellulaire à cellules fermées.

Le document US-B-6 375 254 présente un profilé d'étanchéité pour un toit mobile de véhicule automobile qui incorpore également un moyen de rappel qui est constitué d'un cordon cylindrique plein ou tubulaire à base de caoutchouc cellulaire et qui est coincé dans un logement de section en arc de cercle formé par la face interne de la lèvre souple prolongeant une embase rigide fixée.

Le document JP 2003-237378 divulgue le préambule de la revendication 1.

Ces derniers profilés d'étanchéité connus qui incorporent des moyens de rappel s'avèrent être le siège en utilisation d'une relaxation satisfaisante et donc d'une étanchéité dans le temps améliorée, en comparaison de celles des profilés qui en sont dépourvus. Néanmoins, ces profilés de type à moyens de rappel présentent l'inconvénient majeur d'augmenter les efforts de fermeture requis (ramenés au même périmètre de fenêtre) par rapport à ceux relatifs aux premiers profilés précités.

Un but de la présente invention est de proposer un profilé d'étanchéité destiné à assurer une interface étanche entre deux structures mobiles l'une par rapport à l'autre qui remédie aux inconvénients précités, ledit profilé comportant une partie rigide adaptée pour le fixer à l'une desdites structures, au moins une partie souple d'étanchéité qui est reliée à ladite partie rigide et qui est destinée à être déformée par l'autre structure en réponse à une sollicitation, pour l'obtention de ladite interface étanche, et au moins un moyen de rappel élastique qui est monté entre ladite partie rigide et ladite partie souple et qui est prévu pour exercer une force de rappel sur ladite partie souple en réponse à ladite sollicitation.

A cet effet, un profilé selon l'invention est tel que ledit moyen de rappel est à base d'au moins un élastomère de type caoutchouc ou élastomère thermoplastique ou d'au moins un polymère thermoplastique et est formé d'un seul tenant avec ladite partie souple par co-extrusion, ce moyen de rappel présentant une surface de contact avec ladite partie souple qui est discontinue dans la direction longitudinale dudit profilé.

On notera que ce profilé selon l'invention permet d'obtenir une interface entre deux structures, telles qu'un panneau mobile et un cadre de dormant, qui est caractérisée par un effort de fermeture à produire minimisé en comparaison de celui requis par les profilés à moyen de rappel de l'art antérieur, tout en procurant une bonne étanchéité instantanée et dans la durée.

On notera également que ce profilé selon l'invention est utilisable, en procurant cette combinaison d'avantages, dans tout type d'interface entre deux structures mobiles l'une par rapport à l'autre, qu'il s'agisse d'une interface entre un panneau coulissant, pivotant ou mobile d'une autre manière et un cadre d'un dormant ou bien d'une interface entre deux panneaux mobiles identiques ou différents.

Selon une autre caractéristique de l'invention, ladite partie souple comprend au moins une lèvre d'étanchéité dont est solidaire ledit moyen de rappel.

Selon une autre caractéristique de l'invention, ledit moyen de rappel comprend avantageusement une pluralité de sommets se terminant sous ladite lèvre à intervalles de distance réguliers dans la direction longitudinale dudit profilé, de sorte à définir une pluralité de discontinuités sur ladite surface de contact.

A titre préférentiel, ledit moyen de rappel comporte au moins un élément ondulé qui est continu dans ladite direction longitudinale, de telle sorte que lesdits sommets soient reliés deux à deux entre eux par des creux et, à titre encore plus préférentiel, ledit élément ondulé présente des ondulations successivement convexes et concaves qui sont sensiblement de même amplitude.

Selon une autre caractéristique de l'invention, ledit élément ondulé est alors avantageusement formé d'un cordon ou d'une bande et est constitué d'un matériau cellulaire ou compact, ce matériau étant à base d'au moins un élastomère de type caoutchouc ou élastomère thermoplastique ou d'au moins un polymère thermoplastique (par exemple un PVC) et étant formé d'un seul tenant avec ladite lèvre par co-extrusion, comme indiqué ci-dessus.

On notera que cet élément ondulé de type cordon ou bande permet de limiter substantiellement l'effort de fermeture à exercer sur la lèvre souple tout en procurant, à la manière d'un ressort, une relaxation satisfaisante et donc une bonne étanchéité instantanée et dans la durée.

On notera également qu'il est possible de régler à l'avance le diamètre de ce cordon et/ou la période des ondulations et/ou leur amplitude, afin de réduire encore ou d'adapter les efforts de fermeture à fournir aux conditions d'utilisation prévues.

On notera en outre que ce cordon ou cette bande à ondulations longitudinales peut présenter indifféremment une section transversale sensiblement elliptique, par exemple circulaire, ou bien polygonale, par exemple carrée.

De préférence, ladite partie rigide comporte une embase transversale sur laquelle sont formés des moyens de fixation dudit profilé sur l'une desdites structures, et ladite lèvre s'étend obliquement à partir de l'un des bords latéraux de ladite embase en direction de l'autre bord latéral de cette dernière.

Selon une autre caractéristique de l'invention, ledit moyen de rappel peut être également solidaire de ladite embase.

Selon un exemple de réalisation de l'invention, lesdits moyens de fixation forment une pince en forme de « U » dont la base prolonge sensiblement ladite embase dans la direction transversale dudit profilé et dont les branches s'étendent du même côté de ladite embase que ladite lèvre, à partir de l'autre bord latéral de ladite embase.

Selon un mode de réalisation de l'invention, ledit moyen de rappel est à base d'au moins un élastomère à cellules fermées de type caoutchouc ou élastomère thermoplastique présentant une densité comprise inclusivement entre 0,3 et 0,7.

Selon une variante de réalisation de l'invention, ledit moyen de rappel est à base d'au moins un élastomère compact de type caoutchouc ou élastomère thermoplastique présentant une dureté Shore A, mesurée selon la norme ASTM D 2240 de 1997, qui est inclusivement comprise entre 25 et 60.

Selon une autre caractéristique de l'invention, ladite partie rigide de fixation peut être formée d'un premier matériau qui est soit thermoplastique, soit élastomère de type caoutchouc ou élastomère thermoplastique et qui présente une dureté Shore D, mesurée selon la norme ASTM D 2240 de 1997, qui est inclusivement comprise entre 40 et 60, et ladite partie souple peut être formée d'un second matériau qui est soit thermoplastique, soit élastomère de type caoutchouc ou élastomère thermoplastique et qui présente une dureté Shore A, mesurée selon la norme ASTM D 2240 de 1997, qui est inclusivement comprise entre 50 et 70.

Avantageusement, ladite partie rigide, ladite partie souple et ledit moyen de rappel sont chacun à base d'un polymère thermoplastique ou d'un élastomère thermoplastique comprenant par exemple un mélange d'une polyoléfine, telle qu'un polypropylène, et d'un élastomère, tel qu'un terpolymère éthylène/propylène/diène.

Un procédé de fabrication selon l'invention dudit profilé d'étanchéité comprend une co-extrusion d'au moins trois matériaux compatibles tels que définis ci-dessus, ces trois matériaux étant soit thermoplastiques, soit élastomères de type caoutchoucs ou élastomères thermoplastiques, et étant respectivement destinés à constituer ladite partie rigide, ladite partie souple et ledit moyen de rappel pour les faire adhérer entre eux.

Un module d'étanchéité selon l'invention comporte un cadre qui est adapté pour être fixé sur une première structure, et une garniture d'étanchéité qui est fixée sur ledit cadre et qui est destinée à être déformée élastiquement par une seconde structure venant occuper une position de fermeture sur ladite première structure, et ce module est tel que ladite garniture comporte au moins un profilé d'étanchéité selon l'invention tel que défini ci-dessus.

Selon une autre caractéristique de l'invention, ledit module peut être adapté de sorte que ladite première structure soit un dormant, tel qu'un dormant de fenêtre, et que ladite seconde structure soit un ouvrant à frappe, coulissant ou pivotant, tel qu'un ouvrant de fenêtre.

On notera que la garniture d'étanchéité selon l'invention peut alors être indifféremment montée sur le cadre du dormant ou sur le cadre de l'ouvrant.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue de dessus et en perspective d'un premier exemple de profilé d'étanchéité connu destiné à équiper une interface entre un panneau mobile et un cadre de dormant,
la figure 2 est une vue de dessus et en perspective d'un second exemple de profilé d'étanchéité connu destiné à équiper une interface entre ce panneau mobile et ce cadre de dormant,
la figure 3 est une vue en coupe transversale selon le plan III-III de la figure 2 de ce second exemple de profilé d'étanchéité connu,
la figure 4 est une vue de dessus et en perspective d'un profilé d'étanchéité selon l'invention destiné à équiper une interface entre un panneau mobile et un cadre de dormant, et
la figure 5 est une vue en coupe transversale selon le plan V-V de la figure 4 de ce profilé d'étanchéité selon l'invention.

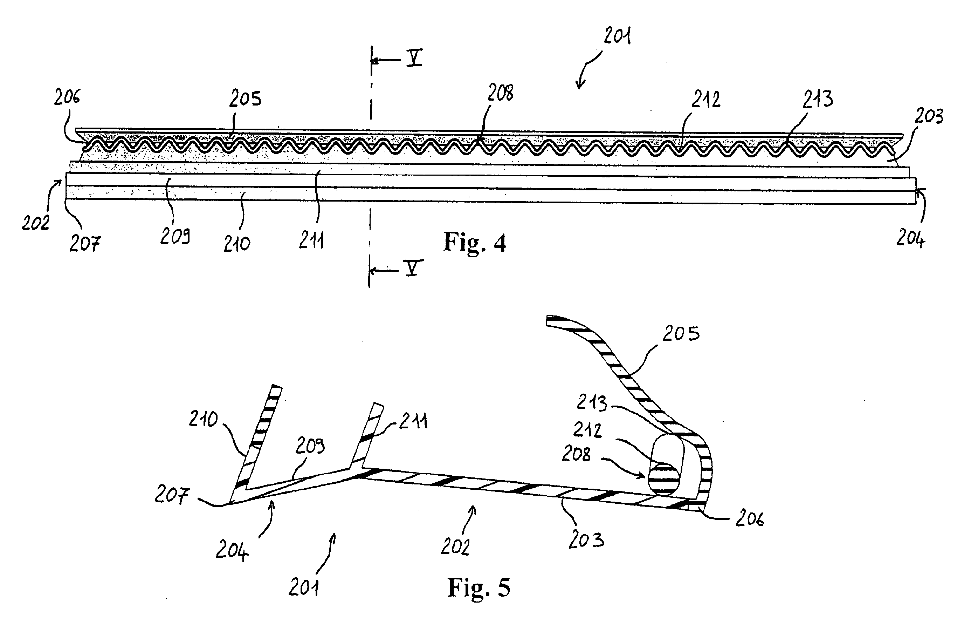

Les figures 4 et 5 illustrent chacune un même exemple d'un profilé d'étanchéité 201 selon l'invention qui est plus particulièrement adapté pour équiper une interface entre un panneau mobile et un cadre de dormant.

Ce profilé 201 comporte :
- une partie rigide 202 qui est adaptée pour fixer le profilé 201 à une première structure, par exemple un cadre de dormant ou d'ouvrant de fenêtre, et qui comporte une embase transversale 203 sur laquelle sont formés des moyens de fixation 204 du profilé 201 sur cette première structure,
- une lèvre souple d'étanchéité 205 qui s'étend obliquement selon un angle aigu à partir d'un bord latéral 206 de l'embase 203 et en direction de l'autre bord latéral 207 de cette dernière, et qui est destinée à être déformée par une seconde structure, par exemple un panneau de vitrage mobile en pivotement, pour l'obtention de ladite interface étanche, et
- au moins un moyen de rappel élastique 208 qui est monté entre la partie rigide 202 et la lèvre souple 205 en étant solidaire de cette dernière et qui est prévu pour exercer une force de rappel sur la lèvre 205 en réponse à une sollicitation de fermeture.

Dans cet exemple de réalisation, les moyens de fixation 204 forment une pince en forme de « U » dont la base 209 prolonge sensiblement l'embase 203 dans la direction transversale du profilé 201 et dont les branches 210 et 211 s'étendent du même côté de l'embase 203 que la lèvre 205, à partir du bord latéral 207.

Selon l'invention, le moyen de rappel 208 présente une surface de contact avec la lèvre 205 qui définit en permanence (i.e. tant au repos que lors d'une sollicitation) une pluralité de discontinuités 212 dans la direction longitudinale du profilé 201, étant dans cet exemple de réalisation formé d'un élément ondulé de type cordon élastomère qui est continu dans cette direction longitudinale et qui présente des ondulations successivement convexes et concaves qui sont sensiblement de même amplitude et de même période. Les ondulations convexes définissent des sommets 213 du moyen de rappel 208 qui sont en contact avec la face inférieure de la lèvre 205, alors que les ondulations concaves ou creux définissent les discontinuités 212 de ladite surface de contact.

Ce moyen de rappel 208, avantageusement de type cordon ondulé, limite ainsi l'effort de fermeture à exercer sur la lèvre 205, tout en procurant à la manière d'un ressort une relaxation satisfaisante et, par conséquent, une bonne étanchéité tant instantanée que dans la durée.

Le moyen de rappel 208 est avantageusement formé d'un seul tenant avec la lèvre 205 et l'embase 203 par co-extrusion d'au moins trois matériaux compatibles thermoplastiques ou élastomères (dans ce dernier cas pouvant être de type caoutchoucs ou élastomères thermoplastiques) qui sont respectivement destinés à constituer la partie rigide 202, la lèvre 205 et ce moyen de rappel 208.

On notera que cette réalisation du profilé 201 par co-extrusion permet de faire adhérer directement le moyen de rappel 208 - tel que le cordon ondulé précité - aussi bien à la lèvre 205 qu'à la partie rigide 202.

Ce moyen de rappel 208 peut être avantageusement à base d'un polymère thermoplastique (par exemple du PVC) ou bien d'un élastomère de type caoutchouc ou élastomère thermoplastique pouvant être un élastomère cellulaire à cellules fermées, de densité par exemple égale à 0,5, ou bien un élastomère compact (cas illustré à la figure 5) de dureté Shore A par exemple égale à 30.

Quant aux matériaux thermoplastiques ou élastomères formant la partie rigide 202 et la lèvre souple 205, ils présentent par exemple respectivement une dureté Shore D égale à 50 et une dureté Shore A égale à 60 (ces duretés Shore sont toutes mesurées selon la norme ASTM D 2240 de 1997).

Avantageusement, la partie rigide 202, la lèvre souple 205 et le moyen de rappel 208 sont chacun à base d'un élastomère thermoplastique comprenant un mélange d'une polyoléfine, telle qu'un polypropylène, et d'un élastomère, tel qu'un terpolymère éthylène/propylène/diène.

On notera par ailleurs que, sans sortie du cadre de la présente invention, ce profilé 201 pourrait être modifié au niveau de ses moyens de fixation 204 pour pouvoir équiper d'une manière générale une interface entre, d'une part, tout type de panneau (e.g. un panneau de porte) mobile en coulissement, pivotement ou autrement et, d'autre part, tout type de dormant ou un autre panneau d'un type identique ou différent du précédent.

## Revendications

1. Profilé d'étanchéité (201) destiné à assurer une interface étanche entre deux structures mobiles l'une par rapport à l'autre, ledit profilé comportant :
- une partie rigide (202) adaptée pour fixer ledit profilé à l'une desdites structures,
- au moins une partie souple d'étanchéité (205) qui est reliée à ladite partie rigide (202) et qui est destinée à être déformée par l'autre structure en réponse à une sollicitation, pour l'obtention de ladite interface étanche, et
- au moins un moyen de rappel élastique (208) qui est monté entre ladite partie rigide et ladite partie souple et qui est prévu pour exercer une force de rappel sur ladite partie souple en réponse à ladite sollicitation, **caractérisé en ce que** ledit moyen de rappel est à base d'au moins un élastomère de type caoutchouc ou élastomère thermoplastique ou d'au moins un polymère thermoplastique et est formé d'un seul tenant avec ladite partie souple par co-extrusion, ledit moyen de rappel présentant une surface de contact avec ladite partie souple qui est discontinue dans la direction longitudinale dudit profilé.

2. Profilé d'étanchéité (201) selon la revendication 1, **caractérisé en ce que** ladite partie souple (205) comprend au moins une lèvre d'étanchéité dont est solidaire ledit moyen de rappel.

3. Profilé d'étanchéité (201) selon la revendication 2, **caractérisé en ce que** ladite partie rigide (202) comporte une embase (203) transversale sur laquelle sont formés des moyens de fixation (204) dudit profilé sur l'une desdites structures, et **en ce que** ladite lèvre (205) s'étend obliquement à partir de l'un des bords latéraux (206) de ladite embase en direction de l'autre bord latéral (207) de cette dernière.

4. Profilé d'étanchéité (201) selon la revendication 3, **caractérisé en ce que** ledit moyen de rappel (208) est solidaire de ladite embase (203).

5. Profilé d'étanchéité (201) selon la revendication 3 ou 4, **caractérisé en ce que** lesdits moyens de fixation (204) forment une pince en forme de « U » dont la base (209) prolonge sensiblement ladite embase (203) dans la direction transversale dudit profilé et dont les branches (210 et 211) s'étendent du même côté de ladite embase que ladite lèvre (205), à partir de l'autre bord latéral (207) de ladite embase.

6. Profilé d'étanchéité (201) selon une des revendications précédentes, **caractérisé en ce que** ledit moyen de rappel (208) comprend une pluralité de sommets (213) se terminant sous ladite lèvre (205) à intervalles de distance réguliers dans la direction longitudinale dudit profilé, de sorte à définir une pluralité de discontinuités (212) sur ladite surface de contact.

7. Profilé d'étanchéité (201) selon la revendication 6, **caractérisé en ce que** ledit moyen de rappel (208) comporte au moins un élément ondulé qui est continu dans ladite direction longitudinale, de telle sorte que lesdits sommets (213) soient reliés deux à deux entre eux par des creux (212).

8. Profilé d'étanchéité (201) selon la revendication 7, **caractérisé en ce que** ledit élément ondulé (208) présente des ondulations successivement convexes et concaves qui sont sensiblement de même amplitude.

9. Profilé d'étanchéité (201) selon la revendication 7 ou 8, **caractérisé en ce que** ledit élément ondulé (208) est formé d'un cordon ou d'une bande et est constitué d'un matériau cellulaire ou compact.

10. Profilé d'étanchéité (201) selon une des revendications 1 à 9, **caractérisé en ce que** ledit moyen de rappel (208) est à base d'au moins un élastomère à cellules fermées de type caoutchouc ou élastomère thermoplastique présentant une densité comprise inclusivement entre 0,3 et 0,7.

11. Profilé d'étanchéité (201) selon une des revendications 1 à 9, **caractérisé en ce que** ledit moyen de rappel (208) est à base d'au moins un élastomère compact de type caoutchouc ou élastomère thermoplastique présentant une dureté Shore A, mesurée selon la norme ASTM D 2240 de 1997, qui est inclusivement comprise entre 25 et 60.

12. Profilé d'étanchéité (201) selon une des revendications précédentes, **caractérisé en ce que** ladite partie rigide de fixation (202) est formée d'un premier matériau qui est soit thermoplastique, soit élastomère de type caoutchouc ou élastomère thermoplastique et qui présente une dureté Shore D, mesurée selon la norme ASTM D 2240 de 1997, qui est inclusivement comprise entre 40 et 60, et **en ce que** ladite partie souple (205) est formée d'un second matériau qui est soit thermoplastique, soit élastomère de type caoutchouc ou élastomère thermoplastique et qui présente une dureté Shore A, mesurée selon la norme ASTM D 2240 de 1997, qui est inclusivement comprise entre 50 et 70.

13. Profilé d'étanchéité (201) selon les revendications 11 et 12, **caractérisé en ce que** ladite partie rigide (202), ladite partie souple (205) et ledit moyen de rappel (208) sont chacun à base d'un polymère thermoplastique ou d'un élastomère thermoplastique comprenant un mélange d'une polyoléfine, telle qu'un polypropylène, et d'un élastomère, tel qu'un terpolymère éthylène/propylène/diène.

14. Procédé de fabrication d'un profilé d'étanchéité (201) selon une des revendications précédentes, **caractérisé en ce qu'**il comprend une co-extrusion d'au moins trois matériaux compatibles qui sont soit thermoplastiques, soit élastomères de type caoutchoucs ou élastomères thermoplastiques, et qui sont respectivement destinés à constituer ladite partie rigide (202), ladite partie souple (205) et ledit moyen de rappel (208) pour les faire adhérer entre eux.

15. Module d'étanchéité comportant un cadre qui est adapté pour être fixé sur une première structure, et une garniture d'étanchéité qui est fixée sur ledit cadre et qui est destinée à être déformée élastiquement par une seconde structure venant occuper une position de fermeture sur ladite première structure, **caractérisé en ce que** ladite garniture comporte au moins. un profilé d'étanchéité (201) tel que défini à l'une des revendications 1 à 13.

16. Module d'étanchéité selon la revendication 15, **caractérisé en ce que** ladite garniture est adaptée de telle sorte que ladite première structure soit un dormant, tel qu'un dormant de fenêtre, et que ladite seconde structure soit un ouvrant à frappe, coulissant ou pivotant, tel qu'un ouvrant de fenêtre, ladite garniture étant montée sur ledit ouvrant ou sur ledit dormant.

## Patentansprüche

1. Dichtungsprofil (201), welches dazu bestimmt ist, einen abgedichteten Übergang zwischen zwei zueinander beweglichen Strukturen sicherzustellen, wobei das Profil umfasst:
- einen starren Teil (202), welcher dazu ausgestaltet ist, das Profil an einer der Strukturen zu befestigen,
- wenigstens einen flexiblen Dichtungsteil (205), welcher mit dem starren Teil (202) verbunden ist und welcher dazu bestimmt ist, von der anderen Struktur in Reaktion auf eine Belastung verformt zu werden, um den abgedichteten Übergang zu erhalten, und
- wenigstens ein elastisches Rückstellmittel (208), welches zwischen dem starren Teil und dem flexiblen Teil angebracht ist und welches dazu vorgesehen ist, in Reaktion auf die Belastung eine Rückstellkraft auf den flexiblen Teil auszuüben,
**dadurch gekennzeichnet, dass** das Rückstellmittel auf Basis wenigstens eines Elastomers vom Typ eines Kautschuks oder thermoplastischen Elastomers oder wenigstens eines thermoplastischen Polymers ist und durch Koextrusion als ein einziges Stück mit dem flexiblen Teil ausgebildet ist, wobei das Rückstellmittel eine Kontaktfläche mit dem flexiblen Teil aufweist, welche in der longitudinalen Richtung des Profils unterbrochen ist.

2. Dichtungsprofil (201) nach Anspruch 1, **dadurch gekennzeichnet, dass** der flexible Teil (205) wenigstens eine Dichtungslippe umfasst, welche an dem Rückstellmittel befestigt ist.

3. Dichtungsprofil (201) nach Anspruch 2, **dadurch gekennzeichnet, dass** der starre Teil (202) einen transversalen Sockel (203) umfasst, an welchem Mittel zur Befestigung (204) des Profils an einer der Strukturen ausgebildet sind, und dass die Lippe (205) sich schräg ausgehend von dem einen der seitlichen Ränder (206) des Sockels in Richtung des anderen seitlichen Rands (207) des letzteren erstreckt.

4. Dichtungsprofil (201) nach Anspruch 3, **dadurch gekennzeichnet, dass** das Rückstellmittel (208) an dem Sockel (203) befestigt ist.

5. Dichtungsprofil (201) nach Anspruch 3 oder 4, **dadurch gekennzeichnet, dass** die Mittel zur Befestigung (204) eine U-förmige Klammer bilden, von welcher die Basis (209) im Wesentlichen den Sockel (203) in der transversalen Richtung des Profils verlängert und von welcher die Schenkel (210 und 211) sich auf derselben Seite des Sockels erstrecken wie die Lippe (205), ausgehend von dem anderen seitlichen Rand (207) des Sockels.

6. Dichtungsprofil (201) nach einem der vorhergehenden Ansprüche, **dadurch gekennzeichnet, dass** das Rückstellmittel (208) in regelmäßigen Abstandsintervallen in der longitudinalen Richtung des Profils eine Vielzahl von Spitzen (213) umfasst, welche unter der Lippe (205) enden, so dass sie eine Vielzahl von Unterbrechungen (212) auf der Kontaktfläche definieren.

7. Dichtungsprofil (201) nach Anspruch 6, **dadurch gekennzeichnet, dass** das Rückstellmittel (208) wenigstens ein gewelltes Element umfasst, welches in der longitudinalen Richtung kontinuierlich ist, so dass die Spitzen (213) von Wellentälern (212) paarweise miteinander verbunden werden.

8. Dichtungsprofil (201) nach Anspruch 7, **dadurch gekennzeichnet, dass** das gewellte Element (208) aufeinanderfolgend konvexe und konkave Wellungen aufweist, welche im Wesentlichen dieselbe Amplitude aufweisen.

9. Dichtungsprofil (201) nach Anspruch 7 oder 8, **dadurch gekennzeichnet, dass** das gewellte Element (208) durch eine Schnur oder ein Band gebildet ist und aus einem zellulären oder kompakten Material besteht.

10. Dichtungsprofil (201) nach einem der Ansprüche 1 bis 9, **dadurch gekennzeichnet, dass** das Rückstellmittel (208) auf Basis wenigstens eines Elastomers mit geschlossenen Zellen vom Typ eines Kautschuks oder thermoplastischen Elastomers ist, welcher eine Dichte aufweist, die zwischen einschließlich 0,3 und 0,7 enthalten ist.

11. Dichtungsprofil (201) nach einem der Ansprüche 1 bis 9, **dadurch gekennzeichnet, dass** das Rückstellmittel (208) auf Basis wenigstens eines kompakten Elastomers vom Typ eines Kautschuks oder thermoplastischen Elastomers ist, welcher eine Shore-A-Härte, gemessen gemäß der Norm ASTM D 2240 von 1997, aufweist, welche zwischen einschließlich 25 und 60 enthalten ist.

12. Dichtungsprofil (201) nach einem der vorhergehenden Ansprüche, **dadurch gekennzeichnet, dass** der starre Teil zur Befestigung (202) gebildet ist aus einem ersten Material, welches entweder thermoplastisch oder elastomer vom Typ eines Kautschuks oder thermoplastischen Elastomers ist, welches eine Shore-D-Härte, gemessen gemäß der Norm ASTM D 2240 von 1997, aufweist, welche zwischen einschließlich 40 und 60 enthalten ist, und dass der flexible Teil (205) gebildet ist aus einem zweiten Material, welches entweder thermoplastisch oder elastomer vom Typ eines Kautschuks oder thermoplastischen Elastomers ist und welches eine Shore-A-Härte, gemessen gemäß der Norm ASTM D 2240 von 1997, aufweist, welche zwischen einschließlich 50 und 70 enthalten ist.

13. Dichtungsprofil (201) nach den Ansprüchen 11 und 12, **dadurch gekennzeichnet, dass** der starre Teil (202), der flexible Teil (205) und das Rückstellmittel (208) jeweils auf Basis eines thermoplastischen Polymers oder eines thermoplastischen Elastomers sind, welcher eine Mischung aus einem Polyolefin, wie z.B. einem Polypropylen, und einem Elastomer, wie z.B. ein Ethylen/Propylen/Dien-Terpolymer, umfasst.

14. Verfahren zur Herstellung eines Dichtungsprofils (201) nach einem der vorhergehenden Ansprüche, **dadurch gekennzeichnet, dass** es eine Koextrusion von wenigstens drei kompatiblen Materialien umfasst, welche entweder thermoplastisch oder elastomer von vom Typ von Kautschuken oder thermoplastischen Elastomeren sind und welche dazu bestimmt sind, den starren Teil (202), den flexiblen Teil (205) bzw. das Rückstellmittel (208) zu bilden, um sie aneinander haften zu lassen.

15. Dichtungsmodul, umfassend einen Rahmen, welcher dazu ausgestaltet ist, an einer ersten Struktur befestigt zu werden, und eine Dichtungsgarnitur, welche an dem Rahmen befestigt ist, und welche dazu bestimmt ist, elastisch durch eine zweite Struktur verformt zu werden, welche eine Schließposition an der ersten Struktur einnimmt, **dadurch gekennzeichnet, dass** die Garnitur wenigstens ein Dichtungsprofil (201) wie in einem der Ansprüche 1 bis 13 definiert umfasst.

16. Dichtungsmodul nach Anspruch 15, **dadurch gekennzeichnet, dass** die Garnitur derart ausgestaltet ist, dass die erste Struktur eine Einfassung ist, wie z.B. eine Fenstereinfassung, und dass die zweite Struktur ein Flügel mit Anschlag, gleitend oder schwenkend ist, wie z.B. ein Fensterflügel, wobei die Garnitur an dem Flügel oder der Einfassung angebracht ist.

## Claims

1. Sealing profile (201) for ensuring an impermeable interface between two structures which can move relative to each other, said profile comprising:
- a rigid portion (202) which is adapted to fix said profile to one of said structures,
- at least one flexible sealing portion (205) which is connected to said rigid portion (202) and is designed to be deformed by the other structure in response to stress, in order to obtain said impermeable interface, and
- at least one resilient return means (208) which is mounted between said rigid portion and said flexible portion and which is provided to exert a returning force on said flexible portion in response to said stress,
**characterised in that** said return means is based on at least one rubber-type elastomer or thermoplastic elastomer or on at least one thermoplastic polymer and is formed in one piece with said flexible portion by co-extrusion, said return means having a contact surface with said flexible portion which is discontinuous in the longitudinal direction of said profile.

2. Sealing profile (201) according to claim 1, **characterised in that** said flexible portion (205) comprises at least one sealing lip with which the return means is integral.

3. Sealing profile (201) according to claim 2, **characterised in that** said rigid portion (202) comprises a transverse base (203) on which fixing means (204) of said profile on one of said structures are formed, and **in that** said lip (205) extends obliquely from one of the lateral edges (206) of said base in the direction of the other lateral edge (207) thereof.

4. Sealing profile (201) according to claim 3, **characterised in that** said return means (208) is integral with said base (203).

5. Sealing profile (201) according to either claim 3 or claim 4, **characterised in that** said fixing means (204) form a clamp in the shape of a "U", the bottom part (209) of which substantially prolongs said base (203) in the transverse direction of said profile and the branches (210 and 211) of which extend from the same side of said base as said lip (205), from the other lateral edge (207) of said base.

6. Sealing profile (201) according to any of the preceding claims, **characterised in that** said return means (208) comprises a plurality of apexes (213) which end under said lip (205) at intervals of regular distance in the longitudinal direction of said profile, so as to define a plurality of discontinuities (212) on said contact surface.

7. Sealing profile (201) according to claim 6, **characterised in that** said return means (208) comprises at least one corrugated element which is continuous in said longitudinal direction, such that said apexes (213) are interconnected in pairs via cavities (212).

8. Sealing profile (201) according to claim 7, **characterised in that** said corrugated element (208) has corrugations which are alternately convex and concave and have substantially the same amplitude.

9. Sealing profile (201) according to either claim 7 or claim 8, **characterised in that** said corrugated element (208) is formed of a cord or a strip and consists of a cellular or compact material.

10. Sealing profile (201) according to any of claims 1 to 9, **characterised in that** said return means (208) is based on at least one elastomer having closed cells of the rubber type or of the thermoplastic elastomer type, having a density of between 0.3 and 0.7 inclusive.

11. Sealing profile (201) according to any of claims 1 to 9, **characterised in that** said return means (208) is based on at least one compact elastomer of the rubber type or of the thermoplastic elastomer type having a Shore hardness A, measured according to the standard ASTM D 2240 of 1997, which is between 25 and 60 inclusive.

12. Sealing profile (201) according to any of the preceding claims, **characterised in that** said rigid fixing portion (202) is formed of a first material which is either thermoplastic or a rubber-type elastomer or a thermoplastic elastomer and which has a Shore hardness D, measured according to the standard ASTM D 2240 of 1997, which is between 40 and 60 inclusive, and **in that** said flexible portion (205) is formed of a second material which is either thermoplastic or a rubber-type elastomer or a thermoplastic elastomer and which has a Shore hardness A, measured according to the standard ASTM D 2240 of 1997, which is between 50 and 70 inclusive.

13. Sealing profile (201) according to claims 11 and 12, **characterised in that** said rigid portion (202), said flexible portion (205) and said return means (208) are each based on a thermoplastic polymer or on a thermoplastic elastomer comprising a mixture of a polyolefin, such as a polypropylene, and of an elastomer, such as an ethylene/propylene/diene terpolymer.

14. Method for producing a sealing profile (201) according to any of the preceding claims, **characterised in that** it comprises a co-extrusion of at least three compatible materials which are either thermoplastic or rubber-type elastomers or thermoplastic elastomers, and which are respectively used to form said rigid portion (202), said flexible portion (205) and said return means (208) to make them adhere to one another.

15. Sealing module comprising a frame which is designed to be fixed to a first structure, and a sealing lining which is fixed to said frame and is designed to be resiliently deformed by a second structure coming to occupy a closing position on said first structure, **characterised in that** said lining comprises at least one sealing profile (201) as defined in any of claims 1 to 13.

16. Sealing module according to claim 15, **characterised in that** said lining is designed such that said first structure is a fixed frame, such as a fixed window frame, and such that said second structure is a panel which can be pushed, slid or pivoted open, such as a window sash, said lining being mounted on said sash or on said fixed frame.
